# EUROPEAN PATENT APPLICATION

(11) **EP 2 536 144 A1**
(43) Date of publication of application: **19.12.2012**
(21) Application number: 11305757.4
(22) Date of filing: 17.06.2011
(51) Int. Cl.: H04N 7/26, H04N 7/50

(54) **Method and device of lossy compress-encoding an image**

(71) Applicant: Thomson Licensing, 92130 Issy-les-Moulineaux (FR)
(72) Inventor: Guillotel, Philippe, 35770 Vern sur Seiche (FR); Yannick, Oliver, 35235 Thorigne Fouillard (FR); Urban, Fabrice, 35235 Thorigne Fouillard (FR); Aribuki, Ayodeji, 2502 Biel/Bienne (CH)
(74) Representative: Streit, Arend

(57) **Abstract**

The invention is concerned with provision of a computationally effective rate-distortion minimization mechanism at macro-block level for compress-encoding of an image.

The invention proposes using an approximated distortion quantization curve for reducing the computational costs in determination of the quantization parameters of the macro blocks. As an instance thereof, the invention proposes a method and processing means for lossy compress encoding the image with quantization parameters adapted at macro block level. The quantization parameter of each macro block is determined using rate-distortion cost optimization with distortion costs being approximated using an approximated distortion quantization curve defined by a quantization pivot point.

Approximation of the distortion quantization curve reduces computational costs.

## Description

### TECHNICAL FIELD

The invention is made in the field of lossy compress-encoding of images.

### BACKGROUND OF THE INVENTION

With the proliferation of broad-band internet connections, the popularity of multimedia streaming technology, the availability of large amounts of multimedia content and the introduction of High Definition resolution in broadcast of television signals, digital video has received increasing popularity in recent years. Video compression is an essential part of any video transmission scheme because of the large amount of information involved in storing and transmitting raw digital video signals.

Lossy compress-encoding tries to represent data, e.g. image or image sequence data, with as few bits as possible or with a target bit rate while at the same time trying to allow the data to be reconstructed from the lossy compress-encoded representation as good as possible.

To achieve this goal, a rate-distortion cost function is defined. Minimizing this function distributes the target bit rate unevenly over macro blocks of the image, i.e. assigns different quantization parameters to the macro blocks, such that global distortion is minimized.

G.J Sullivan and T. Wiegang: "Rate-Distortion optimization for video coding", IEEE Signal Processing Magazine, Vol. 15, pp. 7490, Nov. 1998, propose allocating bit rate at macro block level by solving a constrained rate-distortion optimization problem using Lagrange-multipliers.

Since susceptibility of human visual system (HVS) to distortions is a complex mechanism use of an appropriate distortion metrics reflecting this susceptibility is crucial for achieving best trade-off between encoding costs and subjectively perceived quality loss. Such distortion metrics are also called perceptual metrics.

An example thereof can be found in Z. Wang and A.C Bovik: "A universal image quality index", IEEE Signal Processing Letters, 9(3): 81-84, 2002, the document proposing an objective image quality index (SSIM) designed by modelling image distortion as a combination of three factors: loss of correlation, luminance distortion and contrast distortion.

In Ninassi et al.: "On the Performance of Human Visual System based Image Quality Assessment Metric using Wavelet Domain", SPIE Human vision and Electronic imaging XIII (HVEI'08), January 2008, a wavelet based quality assessment method (WQA) is described.

European Patent Application 2114080 describes a method for assessing the quality of a distorted version of a frame sequence which takes into account the temporal evolution of spatial distortion associated with a block.

### SUMMARY OF THE INVENTION

Lagrange multiplier based algorithms require rate-quantization curves and distortion-quantization curves which are generated by multiple encoding. Therefore, if applied at macro block level computational cost of use of Lagrange multiplier based algorithms is high in particular when used with perceptual metrics such as SSIM or WQA.

The invention is therefore concerned with provision of a computationally effective rate-distortion minimization mechanism at macro-block level for compress-encoding of an image, in particular useful in, but not limited to, combination with perceptual metrics.

The invention proposes using an approximated distortion quantization curve for reducing the computational costs in determination of the quantization parameters of the macro blocks. As an instance thereof, the invention proposes a method according to claim 1.

In an embodiment, the approximated distortion quantization curve is an interpolation around a single distortion quantization pivot point computed for the image wherein interpolation uses at least one further distortion quantization curve computed for at least one further image.

This allows for using prototypical distortion quantization curves as the further curves.

In a further embodiment, the at least one further image is of a same prediction type as the image. This reduces interpolation error.

In yet a further embodiment, the quantization parameter of each macro block is determined by minimizing costs dependent on a distortion and a bit rate. The distortion can be a maximum distortion, an average distortion, a median distortion or an exemplary distortion.

Even yet a further embodiment has the bit rate including a header bit rate required for encoding the quantization parameters of the macro blocks.

Another embodiment comprises using a rho-domain modeled rate quantization curve for determining the quantization parameter of each macro block. Yet another embodiment uses a different bit rate control scheme like spline approximated rate-distortion curves, MPEG Test Model 5 (TM5) or VM8.

The invention in particular proposes a method of reconstructing an image encoded according to claim 1, wherein said method comprises a step of using processing means for decoding the image with quantization parameters adapted at macro block level.

The features of further advantageous embodiments are specified in dependent claims.

### EXEMPLARY EMBODIMENTS OF THE INVENTION

Exemplary embodiments of the invention are explained in more detail in the following description. The exemplary embodiments are explained only for elucidating the invention, but not limiting the invention's disclosure or scope defined in the claims.

The invention may be realized on any electronic device comprising processing means correspondingly adapted. For instance, the invention may be realized in a television, a mobile phone, a personal computer, a digital still camera, a digital video camera a navigation system or a car video system.

An exemplary embodiment of the invention makes use of it in a psycho-visual coding which is based on perceptual distortion macro-block classification and rate-distortion optimization.

This exemplary embodiment uses a video encoding scheme based on perceptual distortion measures and computes an adaptive local quantization step for optimizing the choice of macro block quantization parameters such that it results in an improved subjective quality.

That is, this exemplary embodiment introduces a new constrained rate-distortion optimization based on perceptual metrics. The overall visual quality of an AVC video encoder is improved by means of a local adaptive quantization, driven by more accurate perceptual distortion models to adjust the quantization step of each macro block in the picture. The local adaptation problem is formulated as a constrained optimization problem where more accurate perceptual distortion metrics are used.

As said, the macro block-level rate allocation problem is first modeled as a constrained optimization problem solved with a Lagrange multiplier-based algorithm assuming independency in the choice of macro block quantization parameters. Though this is not satisfied in traditional video coding, the results obtained with the exemplary embodiment are close to the optimal solution with significantly reduced complexity.

The major problem with Lagrange multipliers based algorithms is their requirement of rate-quantization and the distortion-quantization curves whose computational costs are high.

Therefore, in this embodiment of the invention approximations are used for the macro block rate-quantization and distortion-quantization functions. Using an approximation for one of these functions already greatly reduces the complexity of rate re-allocation.

The rate quantization curve (R-Q curve) is approximated by rho-domain rate modelling which exploits the empirical fact that the percentage of zero coefficients of a transform of a block (after quantization) is linearly proportional to the encoding cost of the remaining coefficients.

For a current macro-block, the rate in bits per pixel can be estimated using the percentage ρ of "zero" quantized transform coefficients of said current macro-block and a model parameter θ.

The model parameter θ gives the number of bits used, in average, for encoding a "non-zero" quantized transform coefficient in already encoded macro-blocks. The model parameter θ can be estimated using the number of already encoded macro-blocks of the image or frame, the number of bits already used for encoding these already encoded macro-blocks and the percentage of "zero" quantized transform coefficients in these already encoded macro-blocks.

The set of transform coefficients of a transform of a current macro-block enables computing a look-up table which maps quantization step sizes in the whole quantization step size range, or quantization parameters indexing the different quantization step sizes, to rates in bits per pixel. This is possible since knowledge of the transform coefficients allows for determining a percentage of transform coefficients being zero after quantization using the respective quantization and the model parameter is determined by already encoded macro-blocks of the image or current frame.

But, though knowledge of the transform coefficients allows for determining a percentage of transform coefficients being zero after quantization this determination is not straightforward as it depends on the encoding scheme, e.g. transform size, quantization parameter, prediction mode (intra or inter) and position of the coefficient. But, Maximal Annulled Transform Value tables (MATV tables) can be established. The MATV tables map thresholds to parameter sets, the coefficient being quantized to zero when encoded using the respective parameter set and not exceeding the threshold. Each parameter set specifies at least one of a transform size, a quantization parameter, a prediction mode and a coefficient's position.

The distortion-quantization curve (D-Q curve) is approximated by interpolation around a Distortion-Quantization pivot point, also called D-Q pivot point. For interpolation a distortion-quantization curve is used which is associated with a classification of macro-block. Inventors' experiments indicated that macro-blocks, with similar distortion values at a given pivot quantization point and/or of the same prediction mode (intra or inter) or same prediction type (I, P, or B), follow similar distortion-quantization curves.

A prediction of the distortion-quantization curve is thus obtained by computing a single D-Q pivot point and interpolating the remaining points from a set of pre-computed distortion-quantization curves.

Experiments on several videos show the effectiveness of the exemplary embodiment in allowing provision of reconstructed videos with less visual artifacts, and more uniform subjective quality.

The inventive principle of approximating or predicting a macro-block's distortion-quantization curve can be applied independent from the metric used for determining distortion. That is, it can be applied whether peak-signal to noise ratio (PSNR), means square error MSE or other measures of the signal fidelity is used. And it can be applied with a metric adapted to perceptual distortion.

For instance, it is possible to consider some basic characteristics of the Human Visual System (e.g. luminance masking and texture masking) by a simple extension of PSNR based techniques for predicting perceptual distortion for example by weighting the PSNR value of a block depending on its texture characteristics. Other examples of metrics adapted to perceptual distortion are WQA and SSIM.

The D-Q curves used for interpolation are pre-computed for macro-blocks from several images or image sequences with different quantization parameters.

Each curve represents the distortion of macro-blocks with similar properties, for different quantization values. Only a reduced number of curves are necessary to represent the D-Q behaviour of different macro-blocks and/or pictures.

For finding the quantization parameter (QP) value per macro-block optimizing the subjective quality at a given rate, the exemplary embodiment comprises execution of a method comprising the steps of Initialisation, macro-block Classification and Rate-Distortion optimization.

The step of Initialisation comprises initializing rate model parameters θ_{I}, θ_{P}, and θ_{B}, specific for intra prediction, inter prediction and bidirectional inter prediction. Further the MATV tables are initialized and a set of pre-computed distortion-quantization curves is uploaded.

In the step of macro-block Classification, the image or video frame is encoded at a pre-determined quantization parameter, called QP pivot. Good results were achieved which a QP pivot of 30 since for this QP distortion curves are well separated. Next, for each macro-block in the image or frame the look-up table representing rate-quantization relation is constructed using the MATV tables. For instance, a frame distortion map is computed based on the distortion metrics, e.g. SSIM or WQA. Then, a macro block average distortion map is computed by averaging the pixel distortion values over each non-overlapping macro block in the frame. In another embodiment a maximum pixel distortion values of each non-overlapping macro block is used instead of the average. Further, distortion-quantization curves are predicted for each macro-block using its distortion value at QP pivot and that one of the pre-computed curves which approximates this distortion value at the pivot QP point most closely.

In an embodiment, the pre-computed curves which can be used for prediction is restricted to curves computed for macro-blocks of the same prediction mode (intra or inter) or prediction type (I, P, or B).

According to the step of macro-block Classification, a prediction of the perceptual distortion-quantization curve is therefore obtained as follows: A macro block distortion map is then computed by averaging the pixel distortion values over each 16X16 non-overlapping blocks (each macro block) in the frame. The distortion-quantization curve of each block is predicted by choosing amongst the pre-computed curves based on the value of the distortion at the pivot QP point. In this embodiment the pivot point was fixed at QP=30. With lower values it is difficult to choose the appropriate distortion-quantization curve because the points are closely packed.

The step of Rate-Distortion Optimization comprise determining the optimal set of quantizers for the macro blocks of the frame with a minimal average (MinAve) or a minimal maximum (MinMax) distortion optimization algorithm and given bit budget.

MinAve optimization aims to minimize the average distortion for a given bit budget and is based on the philosophy that a smaller total (or average) distortion results in a better global quality.

MinMax optimization aims to minimize the maximum distortion in a given picture or picture part and for a given bit budget. The idea is that high distortion values in a particular part of an image leads to a lower subjective quality in this part which cannot be outweighed by high subjective quality in other parts of image. Minimizing the maximum distortion also tends to achieve a more uniform distortion in all parts of an image, and is thus preferred when a perceptual distortion metric is considered.

That is, although significant global improvement is observed for the MinAve criteria in comparison to other implementations, a few distorted macro blocks can still be observed with high distortion values. The Human Visual System is very sensitive to such variability in local distortion values. Although the number of distorted blocks seems to be statistically insignificant, these blocks play a cricial role in the overall subjective quality score by human observers especially by experts. Minimizing the maximum distortion value of macro blocks in a frame (MinMax) criterion resolves this issue by explicitely bounding the local maximum allowed distortion value. The proposed implementation of the MinMax criteria is able to minimize the distortion variability within each frame while still maintaining a good score in terms of average distortion.

In the embodiment, bit budget constraint takes into account overhead incurred by switching of the QP setting between the macro blocks.

For a sequence of images, at least the steps of macro-block classification and rate-distortion optimization are iterated.

Among the distortion metrics which can be used together with the current invention there is the PSNR which is a pixel to pixel comparison between the original and reconstructed video signal. PSNR is a log-scaled version of the Mean Square Error (MSE) which is a measure of the average distance between the video signal and its reconstructions.

It is thus a measure of signal fidelity and does not account for the non linear behavior of the Human Visual System. For example, compression artefacts are much less visible to the human eye in areas of high spatial activities like highly textured areas. Therefore subjective evaluations would give different results for the same PSNR value in areas with different texture characteristics.

An example of a distortion metric more similar to subjective evaluation is Structural Similarity Index Measure (SSIM). It is based on the observation that human eye aims to extract mainly structural information from the viewing field, hence the interest for a distortion measure based on structural distortion. The SSIM is computed using an average luminance similarity function; a contrast similarity function and a structure similarity function. More precisely, SSIM depends on the average luminance values, pixel value variances and co-variances of corresponding blocks in original and reconstructed image.

SSIM takes into account some properties of the human vision, it gives better results in predicting the subjective quality compared to PSNR that measure rather the signal fidelity. Unfortunately, this metric shows a tendency to be optimistic in predicting the distortion at regular edges. This is because a high variance value in a block is due to either a high textured area or to the presence of a regular edge. Thus, the SSIM processes them equally when the HVS responds differently to distortion in high textured areas than to regular edges.

Another example of a distortion metric similar to subjective evaluation is Wavelet Based Quality Assessment Metric (WQA) which is an image quality metric based on a multi-channel model of the Human Visual System. The multichannel description of the image is obtained using wavelet decomposition. WQA involves subband decomposition as well as spatial frequency sensitivity and contrast masking to cope with the HVS properties.

WQA comprises luminance adaptation of the original and the reconstructed image to account for the adaptive phenomena of the Human Visual System to the range of luminance values and the non linear relationship between the real and perceived luminance values.

Subband decomposition is then used to obtain a description of the different channels of the Human Visual System present in the image. This stage employs wavelet filters defined by the CDF 9/7 (Cohen-Daubechies-Feauveau) Discrete Wavelet Transform (DWT) to obtain an accurate approximation of the frequency channels of the human eye. The number of decomposition levels L is chosen so that the low frequency (LF) DWT subband matches to the LF subband of the human eye. The wavelet decomposition is used instead of a Fourier transform because of the computational properties of the DWT.

WQA further involves a Contrast Sensitivity Function (CSF) normalization followed by contrast masking and semi-local masking. CSF is a relation between the amplitude of the signal, its spatial frequency and its orientation. Contrast masking and semi-local masking are then applied on the normalized wavelet coefficients. Contrast masking is used to account for the modification of the visibility threshold depending on the contrast value whereas semi-local masking accounts for the modification of the visibility threshold due to the neighbourhood characteristic.

Finally a pooling stage leads to a perceptual error map expressed in term of error visibility pooled from the wavelet subbands, as well as a global quality score obtained by a spatial pooling or a spatio-temporal pooling of the error map. A Minkowski summation is used for both the inter subband pooling and the spatial pooling.

The current invention involves a new coding scheme to optimize the overall visual quality of a video encoder macro-block level adaptive quantization, e.g. an AVC encoder. Since the human eye responds to quantization errors in video signals differently depending on some low level features such as the texture property of the signal, the problem of choosing the optimal set of quantizers for an image is addressed by the current invention as a constrained rate-distortion optimization problem where more accurate distortion measures are selected based on macro block classification. Rate-distortion optimization is addressed using Lagrange multipliers.

The invention proposes approximating at least one of the rate-quantization and the distortion-quantization functions so as to significantly reduce the computational complexity involved in the rate-distortion control algorithm. In an embodiment, rho-domain modelling is used to predict the macro block rate-quantization curve. The distortion-quantization curve of a macro block is approximated from the distortion value at a pivot quantization point.

A direct application to a Lagrange multiplier based algorithm shows results very closed to the ones based on the original RD data with significant reduction in computational complexity.

In experiments the inventors compared four different formulations of the perceptual rate-distortion optimization problem are compared (uniform, std-dev, minave, minmax). Both the MinAve and MinMax optimizations give the best results in terms of both the SSIM and WQA distortion metrics and also by subjective evaluations.

Results further show that the MinMax optimization is able to achieve a more constant perceptual distortion by limiting the maximum distortion in all local regions of the image. The major problem with the minimum average (MinAve) distortion optimization is the potentially large variability among different macro block distortions. This is because this criteria aims to optimize a global metric. And due to HVS's perceptual properties, it is preferable to have a constant distortion over the entire picture. By limiting the largest distortion value allowed for encoding a frame, no macro block distortion value becomes extremely high. Hence, with MinMax optimization it is possible to obtain a more homogeneous perceptual distortion map. MinMax optimization however involves an extra level of iteration and is thus more complex.

For image sequences, the current invention can be applied at frame-level much the same way as it is applied at macro block-level and application can be on one of the levels or both. I.e. the invention can be applied in a method of lossy compress-encoding an image sequence wherein processing means are used for lossy compress encoding the image sequence with frame bit budgets adapted at frame level using rate-distortion optimization wherein the frame bit budget of each frame is determined using an approximated distortion quantization curve.

Similarly, principles used for optimal choice of quantization parameters as described in the various embodiments can be applied for optimal choice of coding modes also.

Several encoding simulations have been carried out on several video sequences at different compression ratios. For the simulations, the availability of a suitable rate allocation scheme at frame level was assumed.

In the simulations local adaptation is performed on I & P frames temporal motion compensated prediction ensures automatic propagation to B frames with low data-rate of B frames not providing room for local adjustment. The efficiency of the approach is evaluated by analyzing quality maps and picture quality scores based on the considered video quality metrics (namely SSIM and WQA). Subjective evaluations were also carried out by observers of the decoded video sequences to further validate the results from the objective metrics.

An evaluation showed that the proposed approximation based local quantization is more efficient than a fixed quantization (e.g. uniform). In the experiments, this was found valid for all bit-rates, even if lower for high bit-rates where the high quality provides less room for improvements.

The adaptive quantization schemes based on approximation succeeded in uniformly distributing the subjective distortion in the image by allocating more bits to the more perceptually degraded regions while maintaining an unnoticeable quality difference in other regions. With the fixed quantization approach, all regions of the picture are reconstructed with constant signal fidelity. Since the human eye has different responses to errors in different regions of an image signal, the proposed quantization parameter adaptation at macro block level scheme allocate the bits more efficiently within the picture. This redistribution of signal errors within the picture leads to a more uniform subjective quality for the whole frame.

## Claims

1. Method of lossy compress-encoding an image, said method comprising: using processing means for lossy compress encoding the image with quantization parameters adapted at macro block level using rate-distortion cost optimization wherein the quantization parameter of each macro block is determined using an approximated distortion quantization curve.

2. Method of claim 1, wherein the approximated distortion quantization curve is an interpolation using at least one further distortion quantization curve computed for at least one further image and a distortion quantization pivot point computed for the image.

3. Method of claim 2, wherein the at least one further image is of a same prediction type as the image.

4. Method of claim 1 or 2, wherein the quantization parameter of each macro block is determined by minimizing costs dependent on a distortion and a bit rate.

5. Method of claim 4, wherein the costs dependent on a maximum distortion.

6. Method of claim 4 or 5, wherein the bit rate includes a header bit rate required for encoding the quantization parameters of the macro blocks.

7. Method of claim 1 or 2, further using a rho-domain modeled rate quantization curve for determining the quantization parameter of each macro block.

8. Method of reconstructing an image encoded according to one of the claims 1-6, said method comprising: using processing means for decoding the image with quantization parameters adapted at macro block level.
